# EUROPÄISCHE PATENTSCHRIFT

(11) **EP 1 663 052 B1**
(45) Veröffentlichungstag und Bekanntmachung des Hinweises auf die Patenterteilung: **13.11.2013**
(21) Anmeldenummer: 04766773.8
(22) Anmeldetag: 13.09.2004
(51) Int. Cl.: A61C 13/00, B22F 3/26, B22F 3/11

(54) **ROHLING UND ZWISCHENKÖRPER ZUR HERSTELLUNG EINES ZAHNERSATZTEILS**
BLANK AND INTERMEDIATE BODY FOR THE PRODUCTION OF A DENTAL PROSTHESIS
EBAUCHE ET CORPS INTERMEDIAIRE POUR LA PRODUCTION D'UN ELEMENT PROTHETIQUE DENTAIRE

(30) Priorität: 11.09.2003 DE 10342231
(43) Veröffentlichungstag der Anmeldung: 07.06.2006
(73) Patentinhaber: Sirona Dental Systems GmbH, 64625 Bensheim (DE)
(72) Erfinder: SALIGER, Günter, 64625 Bensheim (DE); PFEIFFER, Joachim, 64625 Bensheim (DE)
(74) Vertreter: Sommer, Peter
(86) Internationale Anmeldenummer: PCT/EP2004/052147
(87) Internationale Veröffentlichungsnummer: WO 2005/025442

(56) Entgegenhaltungen:
- US-A- 5 336 091
- US-A1- 2003 073 394

## Beschreibung

### Technisches Gebiet

Die Erfindung betrifft einen Rohling und einen Zwischenkörper zur Herstellung eines Zahnersatzteils insbesondere aus metallischen Werkstoffen.

### Stand der Technik

In der Zahntechnik werden für die Herstellung von Kronen und Brücken eine Vielzahl metallischer Legierungen verwendet. Aus diesen Metallen werden mit Hilfe von Gußverfahren nach der Methode der verlorenen Form Kappen und Gerüste bzw. komplette Restaurationen hergestellt. Diese werden dann entweder direkt eingesetzt oder gegebenenfalls noch mit Keramik oder Kunststoff verblendet.

Gebräuchliche Werkstoffe sind AuPt-, CrCo-, NiCo- Legierungen und Titan. Der Verbreitungsgrad der einzelnen Werkstoffe ist sehr stark von lokalen Gewohnheiten geprägt. In bestimmten Märkten werden Zahnersatzstücke zu einem sehr großen Teil aus hochgoldhaltigen Legierungen herstellt.

Aus der EP 0 214 341 ist ein Verfahren zur Herstellung eines metallischen Zahnersatzes bekannt, bei welchem ein Gemisch von Metallpulvern mit einer Anmischflüssigkeit zu einer aufstreichbaren Masse aufbereitet wird und gesintert wird. Das Metallpulvergemisch ist dabei auf einem als Brennträger dienenden Modell modelliert und wird auf dem Modell gesintert. Im wesentlichen dieselbe Technik ist in der EP 0 373 380 A2 beschrieben.

Neben diesem traditionellen Verfahren können verschiedene zahntechnische Legierungen auch direkt mit CAD/CAM Maschinen feingeschliffen werden, was jedoch den Nachteil mit sich bringt, dass der Passkörper in seiner Endform nur ca. 20-30% des insgesamt zerspanten Volumens ausmacht.

Es sind auch Verfahren bekannt, bei denen aus porös gesinterpen Keramikblöcken Gerüste hergestellt werden, die mit einem Lanthanglas infiltriert werden.- Bei einem anderen Verfahren wird eine poröse Pt-Folie auf einen Zahnstumpf aufgebracht wird, die dann mit Gold infiltriert wird, so dass ein Käppchen aus einem Gemisch von Gold und Platin entsteht.

Ein anderer Weg ist in der DE 199 01 643 A1 aufgezeigt, bei dem aus einem sinterfähigen Pulver schichtweise ein Formkörper aufgebaut wird, indem jede Schicht des Pulvers einer zum lokalen Sintern führenden Energie eines Laserstrahls ausgesetzt wird.

Im Bereich der Dentalkeramik ist es aus der DE 199 30 564 A1 bekannt, aus einem pulverförmigen Keramik-Rohmaterial einen Keramikrohling zu prägen, diesen Keramikrohling mittels abtragender Verfahren durch Bearbeiten eine Innenkontur und/oder Außenkontur zu geben und den bearbeiteten Keramikgrünling zu einem hochfesten Keramik-Formteil zu sintern. Das keramische Material wird dabei so gewählt, dass ein Presshilfsmittel verwendet werden kann, welches beim Sintern den zu erwartenden Sinterschrumpf annähernd ausgleicht.

Es ist prinzipiell möglich, auch aus Edelmetalllegierungen einen Rohling herzustellen, der erst nach einer spanenden Bearbeitung dichtgesintert wird, um so seine Endeigenschaften zu erhalten. Bei formschleifenden Herstellungsverfahren macht der eigentliche Passkörper aber nur etwa 20-30% des insgesamt zerspanten Volumens aus. Damit verbietet es sich aus wirtschaftlichen Gründen Edelmetalle als Rohlinge zu verwenden, zumal die Wiederaufarbeitung zerspanter Edelmetalle insbesondere dann teuer wird, wenn die aufzuarbeitenden Späne Verunreinigungen aufweisen.

Allgemein haben Sinterwerkstoffe den Nachteil, dass bei einem Schrumpf von bis zu 30% ein vergleichsweise großes Volumen von der Bearbeitungsmaschine bearbeitet werden muss. Darüber hinaus ist ein Sinterofen notwendig, der Eigenschaften besitzen muss, die in einem zahntechnischen Labor sonst nicht benötigt werden.

Ein Rohling, der eine poröse Gerüststruktur aufweist, die infiltrierbare Hohlräume besitzt und in der Form angepasst werden kann, ist aus der US-A-5336091 bekannt.

Die Aufgabe der Erfindung besteht darin, ein Zahnersatzteil bereitzustellen, welches einerseits aus einem universell verwendbaren Trägermaterial besteht und andererseits flexibel auf möglichst viele Einsatzzwecke angepasst werden kann. Dabei sollen insbesondere Zahnersatzteile unter Verwendung von gebräuchlichen dentalen Schleifmaschinen herstellbar sein, ohne dass die hergestellten Zwischenkörper bei dem Verfahrensschritt, durch den sie ihre Endeigenschaften erhalten, eine Formveränderung erfahren.

Eine weitere Aufgabe besteht darin, einen Verbundwerkstoff oder einen Gradientenwerkstoff bereitzustellen, der aus gleichen oder verschiedenen Werkstoffen, insbesondere jedoch aus hochgoldhaltigen Legierungen bestehen, wobei zugleich auch die Menge der eingesetzten insbesondere edelmetallhaltigen Legierung auf das notwendige Mindestmaß beschränkt wird.

### Darstellung der Erfindung

Die Erfindung geht davon aus, dass anstelle eines Rohlings aus einem Werkstoff mit den endgültigen Materialeigenschaften ein Rohling bearbeitet wird, der die endgültigen Materialeigenschaften des Zahnersatzteils erst durch einen Infiltrationsprozeß des bearbeiteten Rohlings erhält. Diese so geschaffenen Werkstoffe weisen neuartige und vorteilhafte Eigenschaften auf.

Gemäß der Erfindung weist dieser Rohling zur Herstellung von Zahnersatzteilen eine hinreichende Festigkeit für eine materialabtragende Bearbeitung in einer Bearbeitungsmaschine und darüber hinaus eine poröse Gerüststruktur auf, die infiltriebare Hohlräume besitzt, wobei die Gerüststruktur aus einer metallhaltigen CoCrMo-Legierung besteht.

Vorteilhafterweise sind diese Hohlräume so ausgebildet, dass sie vollständig infiltrierbar sind.

Die Eigenschaften des zu bearbeitenden Rohlings werden vorteilhafterweise so eingestellt, dass eine formgenaue Ausarbeitung mit Bearbeitungsmaschinen für Dentalkeramik bei ausreichender Standzeit der Bearbeitungsinstrumente möglich ist und eine gute Handhabbarkeit der Werkstücke unter Beibehaltung einer infiltrierbaren und insbesondere offenporigen Gerüststruktur gegeben ist.

Die Gerüststruktur eines derartig hergestellten Rohlings oder eines durch formgebende Bearbeitung des Rohlings entstandenen Zwischenkörpers lässt sich vorteilhafterweise mit mindestens einem weiteren Werkstoffen infiltrieren, um die gewünschten Endeigenschaften des herzustellenden Werkstücks zu erreichen, ohne dass es dabei zu einer Formveränderung des Rohlings oder eines durch formgebende Bearbeitung des Rohlings entstandenen Zwischenkörpers kommt.

Gemäß der Erfindung weist der Rohling einen Schmelzpunkt auf, der höher als der Schmelzpunkt des zur Infiltration vorgesehenen Materials liegt. Die Oberflächenspannung, das Fließverhalten und die Benetzungsfähigkeit der für die Infiltration verwendeten Materialien ist so auf den Rohling abgestimmt, dass eine möglichst vollständige Befüllung mit dem Infiltrat erreicht wird.

Vorteilhafterweise machen die offenporige Hohlräume 25-95% des Volumens des Rohlings aus, da in diesem Bereich eine Handhabbarkeit des Zwischenkörpers noch gewährleistet ist, gleichzeitig aber auch ein hinreichend hoher Anteil des Infiltrats am Volumen des Endkörpers gegeben ist.

Vorteilhafterweise ist die Zusammensetzung der Gerüststruktur und/oder die Größe der Hohlräume ortsabhängig. Dadurch kann der Anteil des Infiltrats an dem Endkörper gezielt beeinflusst werden und so auf die Dehnungseigenschaften und die Bruchmechanik eingewirkt werden.

Ein durch Bearbeitung des Rohlings hergestellte Zwischenkörper kann in Teilen so ausgebildet sein, dass eine Infiltration nur mit bestimmten Werkstoffen und nur teilweise möglich ist.

Beispielsweise können die Bereiche, die nach der materialabtragenden Bearbeitung die okklusalen und die approximalen Flächen einer Krone darstellen, so ausgebildet sein, dass diese Flächen bis zu einer Tiefe von 0,2 mm von einem ersten Infiltrat, beispielsweise Metall, nicht benetzt werden können, dass sich diese Flächen jedoch nach der Infiltration des restlichen Zwischenkörpers mit dem Infiltrat mit einem zweiten Infiltrat, z.B mit einem zahnfarbenen Kunststoff infiltrieren lässt. So ist es möglich, Rohlinge mit vorgefertigter Okklusalfläche bereitzustellen, wobei die Okklusalfläche so konditioniert worden ist, dass dort das zur Infiltration der Gerüststruktur vorgesehene Metall nicht eindringen kann, weil beispielsweise ein Inhibitor eingebracht wurde. Nachdem diese Rohlinge materialabtragend bearbeitet sind, wobei angenommen wird, dass die Okklusalfläche nur sehr wenig bearbeitet wird, und der bearbeitete Rohling (Zwischenteil) infiltriert worden ist, hat die Okklusalflächen nach wie vor eine poröse Struktur. Nun kann der Inhibitor aus der Okklusalfläche entfernt und die noch poröse Struktur kann z. B. mit einem zahnfarbenen Komposit infiltriert werden.

Die poröse Gerüststruktur besteht aus einer metallhaltigen CoCrMo Legierung und ist insbesondere als Metallschaum ausgebildet. Ein derartiger Rohling kann insbesondere zur Herstellung von Zahnersatzteilen mit einem Anteil an metallischen Werkstoffen dienen. Die in der Gerüststruktur vorhandenen Hohlräume können z.B. mit einem Edelmetall befüllt werden, sodass die gewünschten Materialeigenschaften wie Biokompatibilität, Korrosionsverhalten, Festigkeit, Bruchdehnung, Härte, thermischer Ausdehnungskoeffizient erreicht werden, ohne dass eine Formveränderung des Zwischenkörpers berücksichtigt und ohne dass ein wesentlicher Überschuss an Material zerspant werden muss.

Darüber hinaus kann der Rohling vorgeformte Flächenelemente enthalten, an denen eine mechanische Passung zu anderen Körpern herstellbar ist und/oder die Merkmale aufweisen, die mit dentalen Schleifmaschinen nicht hergestellt werden können. Hierdurch ist eine materialabtragende Bearbeitung dieses Bereichs nicht erforderlich. Dabei handelt es sich insbesondere um Paßflächen, wie sie in der Implantologie zwischen Implantat und Abutment ausgebildet werden.

Gleichermaßen kommen in der Geschiebetechnik präzise Passungen vor, die nach dem Schlüssel/Schloss-Prinzip funktionieren und ebenfalls in der oben angesprochenen Art vorteilhaft umsetzbar sind, da diese Paßflächen bisher nur unter Zuhilfenahme von äußerst komplizierten Mäßnahmen umgesetzt werden konnten. Auf diesem Wege könnte man die Paßflächen vorteilhaft vorgeformt am Block ausbilden, der selbst wiederum beispielsweise durch Spritzgießen hergestellt werden kann.

Diese Flächenelemente können bereits mit bestimmten Werkstoffen beispielsweise der höheren Festigkeit wegen infiltriert worden sein.

Ein weiterer Gegenstand der Erfindung ist ein Zahnersatzteil umfassend einen Zwischenkörper aus einer CoCrMo-Legierung mit einer porösen Gerüststruktur, die offene Hohlräume von 25-95% des Volumens aufweist, wobei die Hohlräume des Zwischenkörpers mit mindestens einem ersten Füllmaterial befüllt sind und wobei das erste Füllmaterial aus einer hochgoldhaltigen Legierung besteht.

Vorteilhafterweise sind erste Teilbereiche des Zwischenkörpers mit dem ersten Füllmaterial und zweite Teilbereiche des Zwischenkörpers mit einem zweiten Füllmaterial befüllt.

Vorzugsweise ist der erste und/oder der zweite Werkstoff Metall oder eine metallische Legierung.

Beim Verfahren zur Herstellung des Rohlings für zahnersatzteile wird ein Gemenge aus einer ein Treibmittel und/oder einen Füllstoff enthaltenden Pulvermischung zu einer Vorform geformt und an-schließend wird das Treibmittel und/oder der Füllstoff unter Ausbildung einer porösen Gerüststruktur entfernt.

Vorteilhafterweise bleibt eine solche Pulvermischung nach Entfernung des Treibmittels und/oder des Füllstoffs als Gerüststruktur nach Art eines Metallschaums erhalten. Bein

Vorteilhafterweise liegt der Anteil des Treibmittels und/oder des Füllstoffs an dem Gemenge zwischen 25 Vol % und 95 Vol %.

Vorteilhafterweise wird eine ortsabhängige Zusammensetzung des Gemenges zu einer aus einem Gradientenwerkstoff bestehenden Vorform durch Schichtpressen, Sedimentieren oder Sprühen hergestellt. Unter einem Gradientenwerkstoff wird dabei ein Werkstoff mit ortsabhängig veränderlichen Werkstoffeigenschaften verstanden.

Darüber hinaus kann das Gemenge zur Herstellung des Rohlings einen Binder aufweisen. Der Binder sorgt dafür, dass das Gemenge in einem Formgebungsverfahren für den Rohling die Form bis zu einem weiteren Bearbeitungsschritt beibehält.

Gemäß einer Weiterbildung kann die Befüllung des Zwischenkörpers mit einer vorgegebenen Menge von Füllmaterial erfolgen, was den Vorteil hat, die Beseitigung oder Wiederverwertung anfallender Überschüsse zu erleichtern.

Gemäß einer anderen Weiterbildung werden erste Teilbereiche des Rohlings und/ oder des Zwischenkörpers mit einem ersten Füllmaterial und zweite Teilbereiche des Rohlings mit einem zweiten Füllmaterial befüllt. Hierdurch lassen sich spezifische Eigenschaften einzelner Bereiche des Zahnersatzteils herstellen. Eine wichtige Eigenschaft von Zahnersatz ist die Haltbarkeit und die Farbe. Es lässt sich auf diesem Wege beispielsweise ein innerer Kern aus Metall bereitstellen, der an der Außenseite formgenau beschliffen ist und dort mit einem Infiltrat befüllt wird, das zahnfarben ist.

Vorteilhafterweise sind die Materialeigenschaften so ausgebildet, dass die Bearbeitung des Rohlings zur Erstellung des Zwischenkörpers durch Schleifen oder Fräsen in einer zur Bearbeitung von Dentalkeramik geeigneten Schleif- oder Fräsmaschine erfolgen kann.

### Kurze Beschreibung von Zeichnungen

In der Zeichnung sind Ausführungsbeispiele der Erfindung dargestellt. Es zeigt:
Fig. 1: einen Rohling mit einer porösen Gerüststruktur in einer perspektivischen Ansicht,
Fig. 2: einen Schnitt durch den Rohling aus Fig. 1 im Detail,
Fig. 3: ein Zahnersatzteil mit Teilbereichen unterschiedlichen Füllmaterials.

Für die Herstellung eines Zahnersatzteils wird zunächst eine Vorform hergestellt, die Metallpulver ein- oder mehrmodaler Partikelgrößen und/oder -formen umfasst. Diese Pulver werden z. B. durch Verdüsen oder chemische Abscheidung hergestellt. Darüber hinaus ist ein Treibmittel vorgesehen, das oberhalb einer bestimmten Temperatur Gas freisetzt, oder es ist ein Füllstoff vorgesehen, der nach der Ausbildung von offenen Hohlräumen entfernt werden kann.

Aus diesem Gemenge kann durch Druck- oder Temperaturkompaktieren die Vorform hergestellt werden.

Wenn das Gemenge darüber hinaus mit Bindernittel versetzt ist, kann es auch durch Spritzgießen, Extrudieren, Strangpressen oder andere Formgebungsverfahren eine solche Vorformgestalt annehmen. Anschließend kann dann der Binder und/oder ein Füllstoff entfernt werden und gegebenenfalls eine weitere Kompaktierung der so erhaltenen Vorform mittels Druck oder Temperatur erfolgen.

Wesentlich ist, dass die Formgebung der Vorform unterhalb der Aktivierungstemperatur des Treibmittels bzw. der Entfernungstemperatur des Füllstoffes erfolgt. Im Falle der Verwendung eines Treibmittels wird die Vorform erst durch eine abschließende Temperaturbehandlung mittels des in dem Treibmittel gebundenen Gases zum eigentlichen Rohling aufgeschäumt. Im Fall der Verwendung eines Füllstoffes wird der Füllstoff aus der Vorform entfernt. Auf diese Weise entsteht eine Gerüststruktur im Rohling, welche kleine, offene Hohlräume aufweist, die möglichst umfangreich sein sollen und die bis zu 95*%* des Volumens dieses Rohlings ausmachen können.

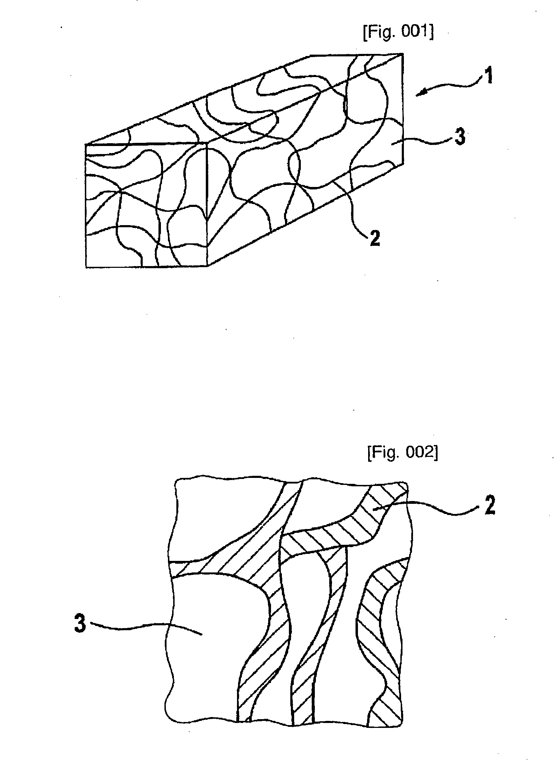

Ein derartiger Rohling 1 ist in Fig. 1 schematisch dargestellt. Zu erkennen ist die Gerüststruktur 2 einerseits und auf der Außenfläche liegende offene Hohlräume 3 andererseits.

In Fig. 2 zeigt einen Schnitt durch den Rohling aus Fig. 1, wobei der gezeigte Ausschnitt im Innern des Rohlings angeordnet ist. Auch hier sind die Gerüststruktur 2 und die Hohlräume 3 deutlich zu erkennen.

Die Konsistenz dieses Rohlings wird dabei auf der einen Seite so eingestellt, dass er ausreichend fest ist, um eine Bearbeitung mit abtragenden Instrumenten durch z.B. Schleifen oder Fräsen zu erlauben und er wird auf der anderen Seite so eingestellt, dass ein möglichst hoher Anteil an offenporigen Hohlräumen entsteht und während der Bearbeitung erhalten bleibt. Dabei soll insbesondere eine Bearbeitbarkeit mit einer üblichen Schleif- oder Fräsmaschine für Dentalkeramik ohne Änderungen an der Maschine bei ausreichender Standzeit der Bearbeitungsinstrumente möglich sein.

Nachdem der Rohling die erforderliche Form in einer vorgegebenen Genauigkeit erhalten hat, wird er mit einem Werkstoff, wie z.B. einer hochgoldhaltige Legierung, entweder vollständig befüllt oder an jenen Stellen soweit befüllt, wie es den Anforderungen entspricht. So kann einerseits ein hochgoldhaltiges Zahnersatzteil zur Verfügung gestellt werden, auf der anderen Seite aber auch z.B. ein Zahnersatzteil, bei welchem die sichtbaren Außenflächen mit z.B. einem gewünschten Farbstoff gefüllt werden, so dass die Farbe des Ersatzteils der Farbe der es umgebenden Zähne entspricht. Das Befüllen kann beispielsweise unter Ausnutzung der Kapillarkräfte erfolgen.

Die Konstruktion eines Zahnersatzteils selbst geschieht unter Berücksichtigung der tatsächlich vorhandenen Situation beim Patienten. Der zu versorgende Bereich wird nach der Herstellung der Präparation in seiner topographischen Gestalt abgetastet. Dies kann beispielsweise über eine Vermessungskamera direkt im Mund des Patienten geschehen oder es kann mit Hilfe eines Positiv- oder Negativabdruckes dieses Gebietes indirekt erfolgen.

Danach wird mit Hilfe bekannter Verfahren eine Modellation der Werkstücke durchgeführt. Dies erfolgt in der Regel über computergestützte Verfahren. Nach der Konstruktion des in seinen Endmaßen bestimmten Zahnersatzteils wird der poröse Rohling durch eine materialabtragende Bearbeitung auf diese Maße bearbeitet.

Durch einen Infiltrationsprozeß wird die offenporige Gerüststruktur des bearbeiteten Rohlings mit einem weiteren, fließfähigen Werkstoff befüllt, wodurch das Werkstück seine Endeigenschaften erhält.

Dazu kann der auf die Endmaße bearbeitete Rohling in die genau abgewogene Menge einer Schmelze aus einer z.B. hochgoldhaltigen Legierung gelegt werden. Durch die Kapillarwirkung werden die Poren des Werkstoffs vollständig mit der Schmelze befüllt. Es entsteht auf diese Weise ein Gefüge, das einer hochgoldhaltigen Gussfüllung nahe kommt.

Dank der Erfindung wird Bearbeitungsmaschinen für Dentalkeramik auch das Feld der hochgoldhaltigen Metallrestaurationen erschlossen und es lassen sich mit CAD/ CAM-Maschinen auf rationelle Weise hochgoldhaltige Käppchen und Gerüste herstellen. Dabei wird nicht die Legierung mit ihren endgültigen Materialeigenschaften selbst bearbeitet, sondern eine Vorstufe davon. Das Verfahren stellt im Unterschied zu gesinterten Zahnersatzteilen einen Zwischenkörper her, der seine Endeigenschaften in einem formtreuen Verfahren erhält.

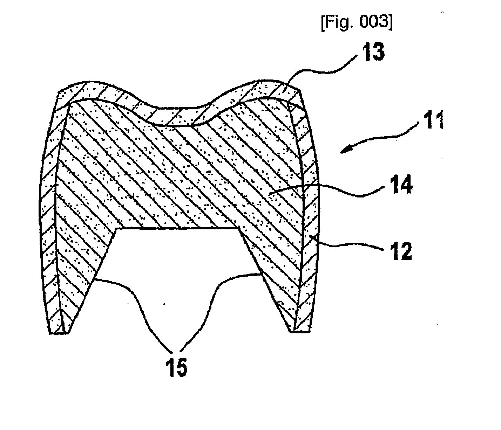

In Fig. 3 ist ein Zahnersatzteil 11 gezeigt, bei dem im Bereich der Außenflächen 12,13 ein erstes Füllmaterial in die Gerüststruktur eingebracht wurde und in dem innenliegenden Bereich 14 ein zweites Füllmaterial.

Dadurch wird die Möglichkeit zur Herstellung echter Verbund- oder Gradientenwerkstoffe eröffnet, die für die Restaurationstechnik vorteilhaftere Eigenschaften aufweisen können, als die bisher bekannten Werkstoffe.

Ganz besonders ist darauf hinzuweisen, dass eine Befüllung der Gerüststruktur mit Kunststoffen ebenfalls möglich ist.

Es können auch Inhibitoren benutzt werden, um den Werkstoff an den Sichtflächen mit einem zahnfarbenen Füllmaterial und im Inneren des bearbeiteten Rohlings mit einem anderen Füllmaterial zu infiltrieren. Unter einem Inhibitor wird dabei ein Stoff verstanden, der die Oberflächenspannung der inneren Oberfläche der Gerüststruktur erhöht, so dass der Infiltrationswerkstoff ohne zusätzlich ausgeübte Kraft in der Gerüststruktur nicht weiter aufsteigt. Diese Technik ist an sich bekannt.

Darüber hinaus sind an dem Zahnersatzteil 11 bereits im Rohling enthaltene vorgeformte Flächenelemente 15 enthalten, an denen eine mechanische Passung zu einem anderen Körper, wie einem Abutment, herstellbar ist.

Eine gängige CoCrMo-Legierung, die in der dentalen Prothetik zur Anwendung kommt, z.B. Remanium 800 von Dentaurum, wird mit Hilfe eines Verdüsungsverfahrens in ein kugelförmiges Pulver umgewandelt. Das Pulver wird fraktioniert und der Anteil des Pulvers mit einem Durchmesser <45µm wird weiterhin genutzt. Dieses Pulver wird nun mit einem wachsartigen Binder und einem Platzhalter versetzt, der Durchmesser zwischen 20 und 150 µm aufweist. Aus diesen Bestandteilen wird ein Granulat hergestellt, das mit Hilfe der Spritzgußtechnik zu Blöcken (Rohlinge) geformt wird. Die Blöcke werden angesintert. Dabei verflüchtigen sich Binder und Platzhalter. Übrig bleibt ein Rohling mit einem Porenanteil zwischen 25 und 95*%*.

Aus diesem Rohling werden mittels bekannter CAD/CAM-Verfahren ein maßgenaues Zwischenteil für Zahnersatzteile wie Käppchen und Brückengerüste hergestellt.

Danach wird das Zwischenteil zusammen mit einer genau abgewogenen Menge einer dentalen Goldlegierung in einen Tiegel gegeben. Die Menge des benötigten Goldes richtet sich nach dem Gewicht des Käppchens. Der Tiegel wird in einem Ofen aufgeheizt, so dass das Gold sich verflüssigt. Durch die Kapillarkräfte wird das Gold in das Gerüst gesaugt.

## Patentansprüche

1. Rohling zur Herstellung von Zahnersatzteilen, aufweisend eine hinreichende Festigkeit für eine materialabtragende Bearbeitung in einer Bearbeitungsmaschine, wobei der Rohling eine poröse Gerüststruktur (2) aufweist, die infiltrierbare Hohlräume (3) besitzt, **dadurch gekennzeichnet, dass** die Gerüststruktur (2) aus einer metallhaltigen CoCrMo-Legierung besteht.

2. Rohling nach der Anspruch 1, **dadurch gekennzeichnet, dass** die Zusammensetzung der Gerüststruktur (2) und/oder die Größe der Hohlräume (3) ortsabhängig ist.

3. Rohling nach Anspruche 1 oder 2, **dadurch gekennzeichnet, dass** der Rohling vorgeformte Flächenelemente (15) enthält, an denen eine mechanische Passung zu anderen Körpern herstellbar ist und/oder die Merkmale aufweisen, die mit den materialabtragenden Bearbeitungsmaschinen nicht hergestellt werden können.

4. Zahnersatzteil, **dadurch gekennzeichnet,**
- **dass** das Zahnersatzteil einen Zwischenkörper aus einer CoCrMo-Legierung mit einer porösen Gerüststruktur (2) aufweist, die offene Hohlräume (3) von 25-95% des Volumens aufweist,
- **dass** die Hohlräume (3) des Zwischenkörpers mit mindestens einem ersten Füllmaterial befüllt sind und
- **dass** das erste Füllmaterial aus einer hochgoldhaltigen Legierung besteht.

5. Zahnersatzteil nach Anspruch 4, **dadurch gekennzeichnet, dass** erste Teilbereiche (12, 13) des Zwischenkörpers (11) mit dem ersten Füllmaterial und zweite Teilbereiche (14) des Zwischenkörpers (11) mit einem zweiten Füllmaterial befüllt sind.

## Claims

1. Blank for manufacturing tooth replacement parts, featuring adequate stability for material-ablating machining on a machine tool, whereby the blank has a porous supporting structure (2), with cavities (3) able to be infiltrated, **characterized in that** the supporting structure (2) consists of a CoCrMo alloy containing metal.

2. Blank in accordance with Claim 1, **characterized in that** the composition of the supporting structure (2) and/or the size of the cavities (3) is location-dependent.

3. Blank in accordance with one of the Claims 1 or 2, **characterized in that** the blank incorporates preformed surface elements (15), on which a mechanical fit with other bodies can be fabricated and/or which exhibit the characteristics that cannot be fabricated using material-ablating machine tools.

4. Tooth replacement part, **characterized in that**
- the tooth replacement part features an intermediate body consisting of a CoCrMo alloy with a porous supporting structure (2), which features open cavities (3) comprising 25 - 95% of the volume,
- the cavities (3) of the intermediate body are filled with at least a first filling material and
- the first filling material consists of an alloy containing a high percentage of gold.

5. Tooth replacement part in accordance with Claim 4, **characterized in that** the first sections (12, 13) of the intermediate body (11) are filled with the first filling material and the second sections (14) of the intermediate body (11) are filled with a second filling material.

## Revendications

1. Ébauche pour la fabrication d'éléments de prothèse dentaire, disposant d'une résistance suffisante pour un usinage par enlèvement de matière dans une machine-outil, l'ébauche contenant une structure de squelette poreuse (2), qui présente des cavités pouvant être infiltrées (3), **caractérisée en ce que** la structure de squelette (2) est composée d'un alliage de CoCrMo contenant un métal.

2. Ébauche selon la revendication 1, **caractérisée en ce que** la composition de la structure de squelette (2) et/ou la taille des cavités (3) dépend de la position.

3. Ébauche selon une des revendications 1 ou 2, **caractérisée en ce que** l'ébauche contient des éléments de surface préformés (15), sur lesquels il est possible de fabriquer une adaptation mécanique pour d'autres corps et/ou qui présentent des caractéristiques qui ne peuvent pas être fabriquées avec les machines-outils d'usinage par enlèvement de matière.

4. Élément de prothèse dentaire, **caractérisé en ce**
- **que** l'élément de prothèse dentaire présente un corps intermédiaire en alliage CoCrMo avec une structure de squelette poreuse (2), qui présente des cavités ouvertes (3) sur 25-95 % du volume,
- en ce que les cavités (3) du corps intermédiaire sont remplies avec au moins un premier matériau de remplissage et
- en ce que le premier matériau de remplissage est composé d'un alliage à forte teneur en or.

5. Élément de prothèse dentaire selon la revendication 4, **caractérisé en ce que** des premières zones partielles (12, 13) du corps intermédiaire (11) sont remplies avec le premier matériau de remplissage et des deuxièmes zones partielles (14) du corps intermédiaire (11) sont remplies avec un deuxième matériau de remplissage.
